# EUROPEAN PATENT SPECIFICATION

(11) **EP 2 383 154 B1**
(45) Date of publication and mention of the grant of the patent: **24.06.2015**
(21) Application number: 09837595.9
(22) Date of filing: 25.12.2009
(51) Int. Cl.: B60R 21/264

(54) **GAS GENERATOR**
GASGENERATOR
GÉNÉRATEUR DE GAZ

(30) Priority: 06.01.2009 JP 2009001044; 06.01.2009 JP 2009001045
(43) Date of publication of application: 02.11.2011
(73) Proprietor: Nippon Kayaku Kabushiki Kaisha, Tokyo 102-8172 (JP)
(72) Inventor: SASAMOTO, Koichi, Himeji-shi Hyogo 679-2123 (JP); UEDA, Shinya, Himeji-shi Hyogo 679-2123 (JP); ENAMI, Koichi, Himeji-shi Hyogo 679-2123 (JP); AOYAGI, Satoshi, Himeji-shi Hyogo 679-2123 (JP); TANAKA, Tatsuro, Himeji-shi Hyogo 679-2123 (JP)
(74) Representative: TBK
(86) International application number: PCT/JP2009/071610
(87) International publication number: WO 2010/079710

(56) References cited:
- EP-A1- 2 426 016
- JP-A- 2000 233 705
- JP-A- 2001 151 071
- JP-A- 2001 151 071
- JP-A- 2002 337 655
- JP-A- 2002 362 298
- JP-A- 2005 313 676
- JP-A- 2005 313 676
- JP-A- 2006 205 893
- JP-U- 3 033 792
- US-B1- 6 314 888

## Description

The present invention relates to a gas generator according to the prearrible of claim 1, the features of which are known from document US 6,314,888 B1. Such a gas generator is incorporated in an air bag apparatus as a vehicle occupant protection apparatus mounted on an automobile or the like, and more particularly has an elongated cylindrical outer shape.

Conventionally, an air bag apparatus serving as a vehicle occupant protection apparatus is widely used in view of protection of occupants of automobiles or the like. The air bag apparatus is provided in the vehicle or the like for the purpose of protecting vehicle occupants from shock caused by crash of vehicles or the like. The air bag is instantaneously inflated and expanded at the time of crash of a vehicle or the like to receive the body of a vehicle occupant by the expanded air bag. The gas generator serves as equipment incorporated in this air bag apparatus to instantaneously generate gas at the time of crash of vehicles or the like for inflating and expanding the air bag.

There are some gas generators variously configured based on the specifications, such as an installation position and an output for the vehicle or the like. There is a gas generator having a structure referred to as "cylinder-shaped". The cylinder-shaped gas generator has an outer shape of an elongated cylinder and is suitably incorporated in the side air bag apparatus, the air bag apparatus for the passenger seat, and the like. In addition to this cylinder-shaped gas generator, the gas generator having an elongated cylindrical outer shape may include a so-called T-shaped gas generator, and the like.

In general, the cylinder-shaped gas generator is configured to include a housing which is provided at its one end in the axial direction with an igniter, an enhancer agent and the like, at its approximately middle portion in the axial direction with a gas generating agent storing chamber storing a gas generating agent, and at its other end in the axial direction with a filter chamber housing a filter and also with a gas discharge opening. In the cylinder-shaped gas generator having the above-described configuration, the flame generated by actuation of the igniter is transferred to the gas generating agent by combustion of the enhancer agent. This causes combustion of the gas generating agent, thereby leading to generation of combustion gas of high temperature and high pressure. The generated combustion gas of high temperature and high pressure flows in the axial direction of the housing from the gas generating agent storing chamber into the filter chamber. The combustion gas then flows through the filter and is discharged through the gas discharge opening to the outside of the housing. The combustion gas discharged through the gas discharge opening is subsequently used for inflating and expanding the air bag.

The specific structure of the cylinder-shaped gas generator having the above-described configuration is disclosed, for example, in document JP 2005-313812 A, JP 11-78766 A and the like. These documents each disclose a cylinder-shaped gas generator having a configuration in which a partition plate is disposed within an elongated cylindrical housing having both ends closed, to partition the space within the housing into a gas generating agent storing chamber containing a gas generating agent and a filter chamber having a filter disposed therein. The cylinder-shaped gas generator employs a filter having a hollow portion extending in the axial direction of the housing, in which a gas discharge opening used for discharging the combustion gas is provided in the portion of the circumferential wall of the housing that defines the filter chamber.

Document JP 2002-337 655 A discloses another example of a cylinder-shaped gas generator.

The partition plate for providing a partition between the gas generating agent storing chamber and the filter chamber is required to function as a pressure bulkhead that resists the thrust force of the combustion gas of high temperature and high pressure generated in the gas generating agent storing chamber when the gas generator is actuated, thereby maintaining the raised internal pressure in the gas generating agent storing chamber. The partition plate functions as a pressure bulkhead, which also leads to prevention of damage to the filter resulting from direct spraying of the combustion gas of high temperature and high pressure onto the filter.

In order to achieve the above-described functions, the gas generator disclosed in each of the above-described JP 2005-313812 A and JP 11-78766 A is configured such that the circumferential wall of the housing is inwardly caulked at prescribed positions to fix the partition plate inserted into the housing in the axial direction, to thereby allow the above-described functions to be performed by the partition plate. However, in the case where such an attachment structure of the partition plate as disclosed in the above documents is employed, it is necessary to subject the housing to a caulking process separately for attachment of the partition plate, or necessary to form the partition pate to be thick in order to prevent unintentional deformation of the partition plate supported only by the housing. This makes it difficult to reduce the length, diameter and weight of the gas generator. In addition, the operation for performing the above-described caulking process is relatively complicated, which also results in an increase in the manufacturing cost.

Therefore, the present invention has been made to solve the above-described problems. An object of the present invention is to provide a gas generator that can be reduced in size and weight and can readily be manufactured without deteriorating the performance.

The object of the invention is achieved by a gas generator according to claim 1.

Advantageous embodiments are carried out according to the dependent claims.

The gas generator according to the present invention includes a housing, a partition member, and an igniter (ignition means). The housing is made of an elongated cylindrical member including a gas generating agent storing chamber storing a gas generating agent and a filter chamber storing a filter. The partition member is inserted into the housing and partitions a space within the housing into the gas generating agent storing chamber and the filter chamber in an axial direction. The igniter is installed in the housing and actuated to generate flame for burning the gas generating agent. The housing has a portion that defines the filter chamber and has a gas discharge opening for discharging gas. The filter is made of a member having a hollow portion extending in the axial direction of the housing and extending at least to an end face closer to the gas generating agent storing chamber. The partition member includes an annular plate portion covering the end face of the filter closer to the gas generating agent storing chamber, a cylindrical portion continuously extending from an inner circumferential edge of the annular plate portion into the hollow portion of the filter and covering an inner circumferential surface of the filter closer to the end face, and a communication hole defined by an inner circumferential surface of the cylindrical portion and providing communication between the gas generating agent storing chamber and the filter chamber. The communication hole has an opening area changed in accordance with an increase in a distance from the annular plate portion.

In the gas generator according to the present invention, it is preferable that the cylindrical portion is gradually decreased or increased in diameter such that the opening area of the communication hole is decreased or increased in accordance with an increase in the distance from the annular plate portion.

In the gas generator according to the present invention, it is preferable that the partition member is fit or loosely fit into the housing.

In the gas generator according to the present invention, it is preferable that the filter is obtained by winding a metal wire material in a cylindrical shape so as to provide a gap therein, and if necessary, subjecting the metal wire material to a sintering process, or by compressing a metal wire material in a cylindrical shape so as to provide a gap therein.

In the gas generator according to the present invention, it is preferable that, when the partition member and the filter are projected in the axial direction of the housing onto a plane orthogonal to the axial direction, an inner edge of a region onto which the filter is projected is located outside of an inner edge of a region onto which the partition member is projected.

In the gas generator according to the present invention, it is preferable that the gas generating agent is enclosed in a first airtight container inserted into the housing and located within the gas generating agent storing chamber.

It is preferable that the gas generator according to the present invention includes an enhancer agent used for transferring the flame generated by actuation of the igniter to the gas generating agent. In this case, it is preferable that the enhancer agent is enclosed in a second airtight container inserted into the housing.

In the gas generator according to the present invention, it is preferable that the igniter is disposed at one end of the housing in the axial direction so as to face the space within the housing, the filter is disposed in a position in the space within the housing closer to an other end of the housing in the axial direction, and the gas generating agent is disposed in a position closer to the one end of the housing than the position where the filter is disposed.

In the gas generator according to the present invention, it is preferable that the igniter is disposed at one end of the housing in the axial direction so as to face the space within the housing, the gas generating agent is disposed in a position in the space within the housing closer to an other end of the housing in the axial direction, and the filter is disposed in a position closer to the one end of the housing than the position where the gas generating agent is disposed.

### EFFECTS OF THE INVENTION

The present invention can provide a gas generator that can be reduced in size and weight and can readily be manufactured without deteriorating the performance.

### BRIEF DESCRIPTION OF THE DRAWINGS

Fig. 1 is a front view and a right side view each showing the exterior structure of a cylinder-shaped gas generator in the first embodiment of the present invention.
Fig. 2 is a schematic cross-sectional view showing the inner structure of the cylinder-shaped gas generator in the first embodiment of the present invention.
Fig. 3 is an enlarged cross-sectional view of the main part of the cylinder-shaped gas generator in the first embodiment of the present invention.
Fig. 4 is an enlarged cross-sectional view of the main part of the cylinder-shaped gas generator in the second embodiment of the present invention.
Fig. 5 is a schematic cross-sectional view showing the inner structure of the cylinder-shaped gas generator in the third embodiment of the present invention.
Fig. 6 is a schematic cross-sectional view showing the inner structure of the cylinder-shaped gas generator according to the first modification in the third embodiment of the present invention.
Fig. 7 is a schematic cross-sectional view showing the inner structure of the cylinder-shaped gas generator according to the second modification in the third embodiment of the present invention.
Fig. 8 is a schematic cross-sectional view showing the inner structure of the cylinder-shaped gas generator in the fourth embodiment of the present invention.

### MODES FOR CARRYING OUT THE INVENTION

The embodiments of the present invention will be hereinafter described in detail with reference to the accompanying drawings. The embodiments described below will be explained by illustrating the case where the present invention is applied to the so-called cylinder-shaped gas generator suitably incorporated in a side air bag apparatus and the like.

### [First Embodiment]

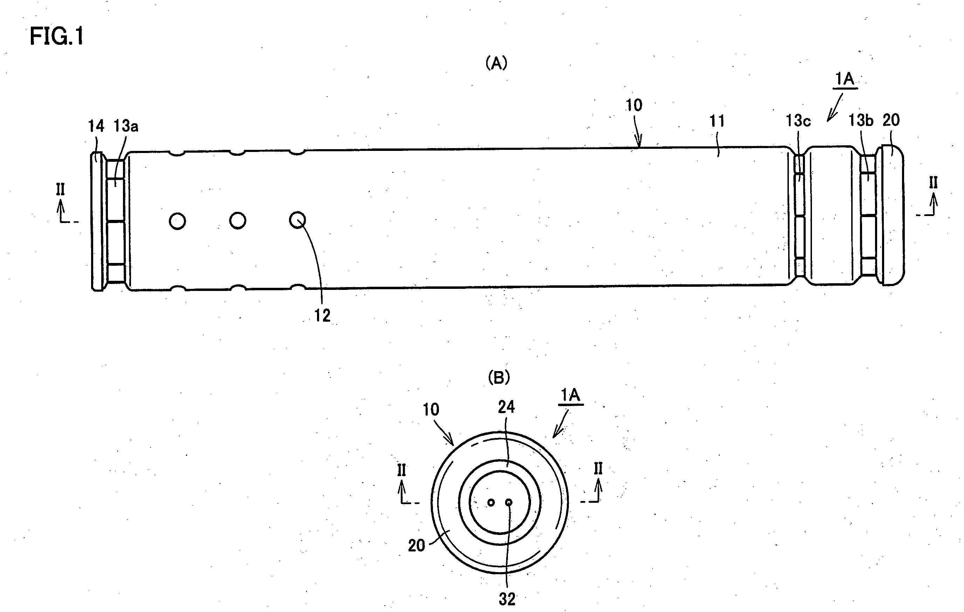

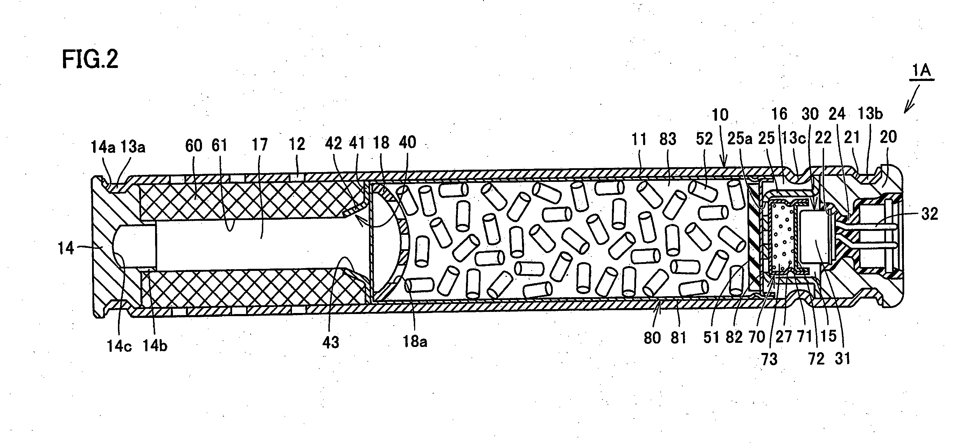

Fig. 1 is a diagram showing the exterior structure of a cylinder-shaped gas generator in the first embodiment of the present invention, in which Fig. 1(A) is a front view and Fig. 1(B) is a right side view. Furthermore, Fig. 2 shows the inner structure of the cylinder-shaped gas generator in the first embodiment of the present invention, which is a schematic cross-sectional view taken along the line II-II shown in Figs. 1(A) and 1(B). First, referring to Figs. 1(A), 1(B) and Fig. 2, the exterior structure and the inner structure of a cylinder-shaped gas generator 1A according to the present embodiment will be described.

As shown in Figs. 1(A), 1(B) and Fig. 2, cylinder-shaped gas generator 1A in the present embodiment has an elongated and approximately cylindrical outer shape, and a housing 10 as an outer shell member. Housing 10 includes a cylindrical member 11, a closing member 14 and a holder 20. Cylindrical member 11 is made of an elongated cylindrical member having an opening at either end in the axial direction. Closing member 14 is made of a disk-shaped member having a prescribed thickness, and closes one of the openings of cylindrical member 11 in the axial direction. Closing member 14 has a circumferential surface provided with a groove 14a for caulking fixation, which will be described below. Groove 14a used for this caulking fixation is annularly formed so as to extend on the circumferential surface of closing member 14 in the circumferential direction. Holder 20 is made of a cylindrical member having a through portion 22 extending in the same direction as the axial direction of cylindrical member 11. Holder 20 closes the other opening of cylindrical member 11 in the axial direction. Holder 20 is provided with a groove 21 for caulking fixation described below in a prescribed position on its outer circumferential surface. Groove 21 used for this caulking fixation is annularly formed so as to extend on the outer circumferential surface of holder 20 in the circumferential direction.

Cylindrical member 11, closing member 14 and holder 20 as described above each are made of a metal member such as stainless steel, steel, an aluminum alloy, and a stainless steel alloy, and each are coupled and fixed by caulking fixation. Specifically, in the state where a part of closing member 14 is inserted into one of the open ends of cylindrical member 11, the portion of the circumferential wall of cylindrical member 11 corresponding to groove 14a provided on the circumferential surface of closing member 14 is decreased in diameter inwardly in the radial direction to engage with groove 14a. This provides caulking fixation of closing member 14 onto cylindrical member 11. In addition, in the state where a part of holder 20 is inserted into the other of the open ends of cylindrical member 11, the portion of the circumferential wall of cylindrical member 11 corresponding to groove 21 provided on the outer circumferential surface of holder 20 is decreased in diameter inwardly in the radial direction to engage with groove 21. This provides caulking fixation of holder 20 onto cylindrical member 11.

The above-described caulking fixation is referred to as caulking in eight directions by which the circumferential wall of cylindrical member 11 is uniformly decreased in diameter inwardly in the radial direction. When the caulking in eight directions is carried out, caulking portions 13a and 13b are provided on the circumferential wall of cylindrical member 11. When the above-described caulking in eight directions is employed, the airtightness can be considerably ensured without particularly interposing a seal member between two members subjected to caulking fixation.

In addition, when cylindrical member 11 is made of a cylindrical member having a bottom, closing member 14 can be eliminated. In this case, by caulking fixation of holder 20 onto cylindrical member 11 so as to close the open end of cylindrical member 11, housing 10 may be formed by cylindrical member 11 and holder 20.

As shown in Fig. 2, an ignition chamber 15, a gas generating agent storing chamber 16 and a filter chamber 17 are provided in the space within cylinder-shaped gas generator 1A defined by cylindrical member 11, closing member 14 and holder 20. Ignition chamber 15, gas generating agent storing chamber 16 and filter chamber 17 are formed by partitioning the space within housing 10 by a cup-shaped member 25 and a partition plate 40 described later which are housed and disposed within housing 10. In this case, in cylinder-shaped gas generator 1A according to the present embodiment, ignition chamber 15 is disposed in the position closer to one end of housing 10 in the axial direction, filter chamber 17 is disposed in the position closer to the other end of housing 10 in the axial direction, and gas generating agent storing chamber 16 is disposed in the position closer to the one end of housing 10 than filter chamber 17.

Ignition chamber 15 is mainly defined by holder 20 and cup-shaped member 25, and provided in the portion of housing 10 closer to holder 20 (the portion on the right side in the figure). An igniter (squib) 30 is disposed within through portion 22 of holder 20. A resin molded portion 24 is located between holder 20 and igniter 30. Cup-shaped member 25 is made of a cylindrical member with a bottom having a space therewithin. Cup-shaped member 25 is disposed so as to be in contact with holder 20 such that the space therewithin faces an ignition portion 31 of igniter 30.

Resin molded portion 24 serves as a part for fixing igniter 30 to holder 20 and adheres to the surface of each of holder 20 and igniter 30. Resin molded portion 24 is formed, for example, by an insert molding. Examples of the raw materials of resin molded portion 24 may include thermosetting resin represented by epoxy resin and the like, and thermoplastic resin and the like represented by polybutylene terephthalate resin, polyethylene terephthalate resin, polyamide resin (for example, nylon 6, nylon 66 and the like), polypropylene sulfide resin, polypropylene oxide resin, and the like.

Igniter 30 serves as an apparatus for generating flame in order to burn a gas generating agent 52 described later, and includes ignition portion 31 and a terminal pin 32. Ignition portion 31 includes an ignition charge for ignition during the actuation and a resistor for burning this ignition charge. Terminal pin 32 is connected to ignition portion 31 in order to ignite the ignition charge. More specifically, igniter 30 includes a base portion through which a pair of terminal pins 32 are inserted for holding thereof, and a squib cup attached onto the base portion. A resistor (bridge wire) is attached to couple the end of terminal pin 32 inserted into the squib cup, and an ignition charge is packed in the squib cup so as to surround this resistor or to be into contact with this resistor. Examples of the resistor may generally include a nichrome wire and the like. Examples of the ignition charge may generally include ZPP (zirconium potassium perchlorate), ZWPP (zirconium tungsten potassium perchlorate), lead tricinate, or the like. The squib cup is generally made of metal or plastic.

When collision is detected, a prescribed amount of current flows in the resistor through terminal pin 32. As a result of a prescribed amount of current flowing in the resistor, Joule heat is generated in the resistor. When receiving this heat, the ignition charge starts burning. High-temperature flame produced by combustion explodes the squib cup storing the ignition charge. The time from current flowing in the resistor to actuation of igniter 30 is three milliseconds or shorter when a nichrome wire is used for the resistor.

As shown in Fig. 2, a second airtight container 70 is housed in the space defined by cup-shaped member 25, holder 20, igniter 30 and the like of ignition chamber 15 (that is, the space within cup-shaped member 25). Second airtight container 70 includes a cylindrical cup portion 71 having a bottom, and a cap portion 72 closing the opening of cup portion 71. When these cup portion 71 and cap portion 72 are combined and joined together, storage space 73 provided therewithin is airtightly sealed from the outside of second airtight container 70. Cup portion 71 and cap portion 72 are made using a sheet metal (foil) such as copper, aluminum, a copper alloy, and an aluminum alloy that is molded by presswork or the like. Furthermore, cup portion 71 and cap portion 72 are joined together suitably using brazing, adhesion, and the like.

A plurality of granular enhancer agents 27 are packed in storage space 73 of second airtight container 70. Enhancer agents 27 are ignited by the flame generated by actuation of igniter 30 and burned to generate hot particles. Enhancer agents 27 are required to allow gas generating agent 52 described below to start burning reliably, and a composition made of metal powder/oxidant represented by B/KNO₃ or the like is generally used. Examples of enhancer agent 27 may include powder, a mold formed in a prescribed shape by a binder, or the like. The shape of the enhancer agent molded by the binder may have a variety of shapes, for example, like granules, a column, a sheet, a ball, a cylinder with a single hole, a cylinder with multiple holes, a tablet, and the like.

A plurality of openings 25a are provided in the bottom wall of cup-shaped member 25. These openings 25a provide communication between ignition chamber 15 and gas generating agent storing chamber 16. Furthermore, a flange portion is formed in the open end of cup-shaped member 25 closer to holder 20 so as to extend toward the outside. The flange portion is sandwiched between the axial end face of holder 20 and a caulking portion 13c provided in cylindrical member 11, which allows cup-shaped member 25 to be fixed to housing 10. In addition, cup-shaped member 25 is fixed to housing 10 by using the caulking in eight directions as described above.

As shown in Fig. 2, gas generating agent storing chamber 16 is defined by cylindrical member 11, partition plate 40 described later and cup-shaped member 25, and provided approximately in the middle portion of housing 10. A first airtight container 80 is housed in gas generating agent storing chamber 16. First airtight container 80 includes a cylindrical cup portion 81 having a bottom, and a cap portion 82 closing the opening of cup portion 81. When these cup portion 81 and cap portion 82 are combined and joined together, a storage space 83 provided therewithin is airtightly sealed from the outside of first airtight container 80. Cup portion 81 and cap portion 82 are made using a sheet metal (foil) such as copper, aluminum, a copper alloy, and an aluminum alloy that is molded by presswork or the like. Furthermore, cup portion 81 and cap portion 82 are joined together suitably using brazing, adhesion, and the like.

A plurality of granular gas generating agents 52, a perforated plate 18 and a cushion member 51 are stored in storage space 83 of first airtight container 80. More specifically, perforated plate 18 is disposed in the end portion of storage space 83 of first airtight container 80 closer to filter chamber 17, and cushion member 51 is disposed in the end portion of storage space 83 of first airtight container 80 closer to ignition chamber 15. The plurality of granular gas generating agents 52 are packed in storage space 83 of first airtight container 80 so as to be located between perforated plate 18 and cushion member 51.

Gas generating agents 52 are fired by hot particles produced by combustion of enhancer agent 27 ignited by igniter 30 and burned to generate gas. Gas generating agents 52 are generally formed as molded bodies including a fuel, an oxidant and an additive. As a fuel, for example, a triazole derivative, a tetrazol derivative, a guanidine derivative, an azodicarbonamide derivative, a hydrazine derivative, or the like or a combination thereof is used. Specifically, for example, nitroguanidine, guanidine nitrate, cyanoguanidine, 5-aminotetrazol, or the like is suitably used. Furthermore, as an oxidant, for example, nitrate or the like including cation selected from alkali metal, alkaline-earth metal, transition metal, ammonia is used. As a nitrate, for example, sodium nitrate, potassium nitrate, or the like is suitably used. Furthermore, an additive includes a binder, a slag forming agent, a combustion adjustment agent, and the like. As a binder, for example, an organic binder such as a metal salt of carboxymethyl cellulose or stearic acid salt, or an inorganic binder such as synthetic hydroxytalcite or acid clay can suitably be used. As a slag forming agent, silicon nitride, silica, acid clay, or the like can suitably be used. As a combustion adjustment agent, a metal oxide, ferrosilicon, activated carbon, graphite or the like can suitably be used.

The shape of the molded body of gas generating agent 52 that is granularly molded includes a variety of shapes like a granule, a pellet, a column, a disk, and the like. A holed molded body (for example, a cylindrical shape with a single hole or a cylindrical shape with multiple holes) is also used. These shapes are preferably selected as appropriate depending on the specifications of the air bag apparatus having cylinder-shaped gas generator 1A incorporated therein. An optimum shape is preferably selected according to the specifications, for example, such a shape is selected that allows the gas generation speed to change over time during combustion of gas generating agent 52. In addition to the shape of gas generating agent 52, the size and the packed amount of the molded body are preferably selected as appropriate in consideration of the linear combustion rate, the pressure index of gas generating agent 52, and the like. The molded body can be formed in the shape of a pellet, for example, having a diameter of approximately 2.0 mm to 3.5 mm and a thickness of approximately 1.0 mm to 1.6 mm.

Cushion member 51 serves as a crush preventing member for preventing gas generating agents 52 formed of molded bodies from being crushed by vibration and the like, and a molded body of ceramic fiber, foamed silicone or the like is suitably used. At the time of actuation, combustion of enhancer agent 27 causes cushion member 51 to be opened or split, and burned down in some cases.

Perforated plate 18 is made of a plate-shaped member having a plurality of through holes 18a provided therein. Perforated plate 18 has a middle portion that is curved so as to protrude toward holder 20. Through holes 18a provided in perforated plate 18 each are formed smaller than the outer shape of gas generating agent 52. Perforated plate 18 serves as an entry preventing member for preventing entry of gas generating agent 52 into filter chamber 17. Perforated plate 18 is suitably made of a metal member such as stainless steel, steel, an aluminum alloy, and a stainless steel alloy. Furthermore, perforated plate 18 also serves to adjust the flow of the combustion gas which passes through perforated plate 18 at the time of actuation. It is preferable that through hole 18a has a diameter of approximately 1.5 mm to 2.5 mm, for example.

As described above, cylinder-shaped gas generator 1A in the present embodiment is configured such that gas generating agent 52 and enhancer agent 27 are enclosed in first airtight container 80 and second airtight container 70, respectively. Accordingly, these agents are enclosed in the airtight container in advance, which not only allows facilitation of the assembly operation of cylinder-shaped gas generator 1A, but also allows elimination of the process for subjecting housing 10 separately to an airtight-sealing process. Consequently, the number of parts can be reduced while the configuration can be simplified. Furthermore, cylinder-shaped gas generator 1A in the present embodiment is configured such that, in addition to gas generating agent 52, perforated plate 18 and cushion member 51 are enclosed in first airtight container 80 in advance. Accordingly, the effect of further facilitating the assembly operation of cylinder-shaped gas generator 1A can also be achieved.

Partition plate 40 serves as a partition member for partitioning the space within housing 10 into gas generating agent storing chamber 16 and filter chamber 17 in the axial direction. Partition plate 40 is located so as to be in contact with first airtight container 80 described above in the space within housing 10. Partition plate 40 includes an annular plate portion 41 having a main surface orthogonal to the axis of housing 10, a cylindrical portion 42 continuously extending from the inner circumferential edge of annular plate portion 41 in the direction away from the above-described first airtight container 80, and a communication hole 43 defined by cylindrical portion 42 and provide communication between gas generating agent storing chamber 16 and filter chamber 17. In addition, the detailed configuration, the installation structure and the like of partition plate 40 will be described later.

Filter chamber 17 is defined by cylindrical member 11, closing member 14 and partition plate 40, and provided in the portion of housing 10 closer to closing member 14 (the portion on the left side in the figure). Filter 60 is housed in filter chamber 17. Filter 60 extends in the same direction as the axial direction of housing 10 and is made of a cylindrical member having a hollow portion 61 that reaches the axial end face thereof, in which the end face closer to gas generating agent storing chamber 16 in the axial direction is in contact with partition plate 40, and the other end face is in contact with closing member 14. Furthermore, the outer circumferential surface of filter 60 is in contact with the inner circumferential surface of cylindrical member 11. When filter 60 made of such a cylindrical member is used, the flow resistance of the combustion gas flowing through filter chamber 17 at the time of actuation may be suppressed low, which allows an efficient flow of the combustion gas to be achieved.

Filter 60 used herein is obtained, for example, by winding a metal wire material such as stainless steel and steel or a mesh material having a metal wire material interwoven therewith, by compressing the same by presswork, or the like. Examples of mesh material specifically includes a stockinette metal mesh, a plain-woven metal mesh, an assembly of crimp-woven metal wire materials, and the like. Filter 60 thus obtained by winding the metal wire material in a cylindrical shape or by compressing the same by presswork is provided with a gap therein, which allows the above-described combustion gas to flow therethrough. In addition, when filter 60 obtained by winding the metal wire material in a cylindrical shape is used, it is preferable that a sintering process is carried out after winding of the metal wire material. When the combustion gas generated in gas generating agent storing chamber 16 passes through filter 60, filter 60 functions as a cooling unit serving to remove the heat of high temperature of the combustion gas for cooling thereof, and also functions as a removal unit removing the residues (slag) and the like contained in the combustion gas.

A gas discharge opening 12 is provided in the portion of the circumferential wall of cylindrical member 11 that defines filter chamber 17. Gas discharge opening 12 serves as a hole for discharging the combustion gas generated within cylinder-shaped gas generator 1A to the outside. A plurality of gas discharge openings 12 are provided in the circumferential direction and the axial direction of cylindrical member 11. For example, in the case where cylindrical member 11 has an outer diameter of 20.0 mm and an inner diameter of 16.6 mm, cylindrical member 11 is provided with a total of eight holes each having a diameter of about 2.5 mm to 3.5 mm, which allows gas discharge opening 12 to be provided.

Closing member 14 has a protrusion 14b in the area of the middle portion of the main surface that defines filter chamber 17 such that protrusion 14b is formed to protrude toward filter chamber 17. Protrusion 14b is formed, for example, when closing member 14 is molded by cold forging. Protrusion 14b is inserted into hollow portion 61 of filter 60 to thereby position and hold filter 60. Furthermore, the portion of the main surface defining filter chamber 17 of closing member 14 is provided with a recess 14c in addition to protrusion 14b. Recess 14c is formed, for example, when closing member 14 is molded by cold forging. Recess 14c serves to collect slag contained in the combustion gas that has passed through hollow portion 61 of filter 60 and been sprayed. When the slag contained in the sprayed combustion gas adheres to the surface of recess 14c, the slag is then collected within recess 14c. Thus, outflow of the slag to the outside of recess 14c may be suppressed.

In addition, a female connector (not shown) is attached to the end of cylinder-shaped gas generator 1A on the side on which holder 20 is disposed. This female connector corresponds to a part to which a male connector of the harness is connected that serves to transmit the signal from a collision detecting sensor provided separately from cylinder-shaped gas generator 1A. The female connector is provided with a shorting clip (not shown) as appropriate. This shorting clip is attached in order to prevent cylinder-shaped gas generator 1A from malfunctioning by electrostatic discharge or the like during transportation and the like of cylinder-shaped gas generator 1A. The shorting clip is disengaged from terminal pin 32 by inserting the male connector of the harness into the female connector at the stage of installation to the air bag apparatus.

Then, the operation during the actuation of cylinder-shaped gas generator 1A described above will be described. When there is a collision of a vehicle equipped with an air bag apparatus having cylinder-shaped gas generator 1A in the present embodiment incorporated therein, the collision detection unit separately provided in the vehicle detects the collision. Based on this detection, igniter 30 is actuated. When igniter 30 is actuated, the pressure within ignition portion 31 is raised by combustion of the ignition charge, which causes explosion of ignition portion 31. Consequently, flame flows out of ignition portion 31.

After the explosion of ignition portion 31, the temperature and pressure within ignition chamber 15 are raised, which causes melting or explosion of second airtight container 70. Consequently, enhancer agent 27 stored in second airtight container 70 is ignited and burned by the flame produced by actuation of igniter 30, thereby generating a great amount of hot particles. The generated great amount of hot particles flows through opening 25a provided in cup-shaped member 25 to gas generating agent storing chamber 16.

The hot particles arriving at gas generating agent storing chamber 16 causes melting or explosion of cap portion 82 of first airtight container 80, thereby causing cushion member 51 to be opened or split. The hot particles finally reaches gas generating agent 52. Consequently, gas generating agent 52 is fired and burned, so that a great amount of combustion gas is generated. The generated combustion gas passes through a through hole 18a provided in perforated plate 18, explodes cup portion 81 of first airtight container 80 located in front thereof, and then flows into filter chamber 17 through communication hole 43 provided in partition plate 40.

The combustion gas flowing into filter chamber 17 flows through hollow portion 61 of filter 60 in the axial direction of housing 10. The flow direction of the combustion gas is then changed, and the combustion gas flows into filter 60. When the combustion gas flows through filter 60, it is cooled to a prescribed temperature. Then, the combustion gas is discharged through gas discharge opening 12 to the outside of cylinder-shaped gas generator 1A. The combustion gas discharged from gas discharge opening 12 is guided into the air bag for inflating and expanding the air bag.

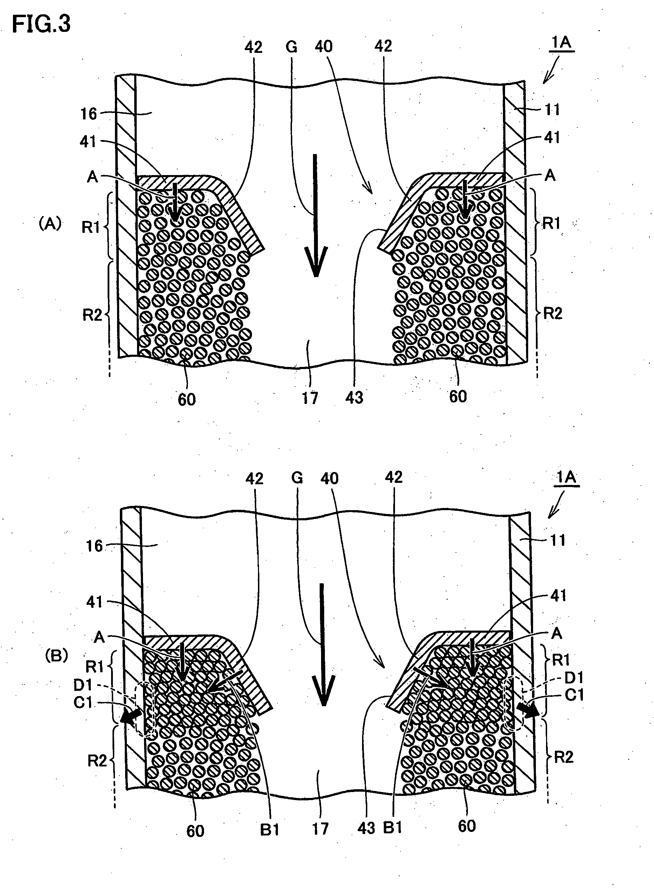

Fig. 3 is a main-part enlarged cross-sectional view showing an enlarged portion in the vicinity of the position in which the partition plate of the cylinder-shaped gas generator in the first embodiment of the present invention is provided. Fig. 3(A) is a diagram showing the state immediately after the start of actuation of the cylinder-shaped gas generator. Fig. 3(B) is a diagram showing the state after a lapse of a prescribed time period from the start of actuation. Then, referring to Figs. 3(A) and 3(B), the detailed explanation will be made with regard to the configuration and the installation structure of partition plate 40 as well as the reasons why partition plate 40 functions as a pressure bulkhead.

First, referring to Fig. 3(A), the detailed explanation will be made with regard to the configuration and the installation structure of partition plate 40 of cylinder-shaped gas generator 1A in the present embodiment. As described above, partition plate 40 of cylinder-shaped gas generator 1A in the present embodiment has annular plate portion 41, cylindrical portion 42, and communication hole 43. Annular plate portion 41 covers the end face of filter 60 closer to gas generating agent storing chamber 16. Cylindrical portion 42 continuously extends from the inner circumferential edge of annular plate portion 41 into hollow portion 61 of filter 60 and covers the inner circumferential surface of filter 60 closer to the end face. Communication hole 43 is defined by the inner circumferential surface of cylindrical portion 42, and provides communication between gas generating agent storing chamber 16 and filter chamber 17. Then, cylindrical portion 42 is configured to have a conical plate shape that is gradually decreased in diameter such that the opening area of communication hole 43 is decreased in accordance with an increase in the distance from annular plate portion 41 (in accordance with an increase in the distance from gas generating agent storing chamber 16 and with a decrease in the distance from the end of cylindrical portion 42).

Partition plate 40 is fit or loosely fit into cylindrical member 11. Thus, cylindrical member 11 is not subjected to the caulking process for fixing partition plate 40. The term "fit" includes so-called press fit, and means the state where the outer circumferential edge of annular plate portion 41 of partition plate 40 is attached in contact with the inner circumferential surface of cylindrical member 11. Furthermore, the terms "loosely fit" means the state where the outer circumferential edge of annular plate portion 41 of partition plate 40 and the inner circumferential surface of cylindrical member 11 are not necessarily in contact with each other over the entire circumference, but are inserted with a little gap (allowance in mechanical fixing).

Partition plate 40 is attached to the end of filter 60 closer to gas generating agent storing chamber 16. Partition plate 40 is sandwiched between filter 60 and first airtight container 80 storing the above-described gas generating agent 52, so that it is supported within cylindrical member 11. In addition, partition plate 40 is formed by presswork or the like of the plate member made of metal such as stainless steel, steel, an aluminum alloy, and a stainless steel alloy, for example.

Referring to Figs. 3(A) and 3(B), an explanation will be made with regard to the reasons why partition plate 40 functions as a pressure bulkhead maintaining the internal pressure in gas generating agent storing chamber 16 and preventing damage to filter 60 even in the case where the configuration and the installation structure of partition plate 40 as described above are employed in cylinder-shaped gas generator 1A in the present embodiment. In Figs. 3(A) and 3(B), the flow direction of the combustion gas is indicated by an arrow G.

As shown in Fig. 3 (A), immediately after the start of actuation of cylinder-shaped gas generator 1A, when receiving the thrust force of the combustion gas of high temperature and high pressure generated in gas generating agent storing chamber 16 (that is, the pressure produced in accordance with a rise in the internal pressure of gas generating agent housing chamber 16, the force indicated by an arrow A in the figure), annular plate portion 41 of partition plate 40 receives the force in the axial direction of cylindrical member 11 toward filter 60. Consequently, annular plate portion 41 of partition plate 40 starts to move toward filter 60. This movement of annular plate portion 41 causes compression, in the axial direction of cylindrical member 11, of the portion of filter 60 surrounded by partition plate 40 and cylindrical member 11 (that is, the portion in the vicinity of the end of filter 60 closer to gas generating agent storing chamber 16, the portion included in a region R1 shown in the figure).

Thus, filter 60 is provided with a gap therewithin that is obtained by winding a metal wire material or a mesh material having a metal wire material interwoven therewith, or by compressing the same by presswork. In this case, as shown in Fig. 3(B), the volume of the gap is decreased in accordance with the above-described movement of annular plate portion 41. In addition, while the metal wire material is further densely filled in region R1, it tends to expand in the radial direction of cylindrical member 11, thereby generating a force to cause cylindrical portion 42 of partition plate 40 to be squeezed inwardly in the radial direction of cylindrical member 11. However, cylindrical portion 42 of partition plate 40 is applied with a force approximately in the radial direction of cylindrical member 11 toward the outside in accordance with an increase in the internal pressure as described above (the force indicated by an arrow B1 shown in the figure). Accordingly, this force overwhelms the force causing cylindrical portion 42 of partition plate 40 to be squeezed inwardly in the radial direction of cylindrical member 11. In addition, its reaction force (the force indicated by an arrow C1 in the figure) is to be added to the contact portion between cylindrical member 11 and filter 60 (a region D1 shown in the figure). This causes a frictional force to be produced in the contact portion between cylindrical member 11 and filter 60. This frictional force then serves as a brake force for suppressing further movement of partition plate 40 toward filter 60.

In this case, the reaction force (the force indicated by arrow C1 in the figure) serves to act in the direction orthogonal to the radial direction and the axial direction of cylindrical member 11. Accordingly, the reaction force is to act as a high brake force that prevents movement of partition plate 40 in a wide range of cylindrical member 11, which results in a slight amount of movement of partition plate 40 based on this brake force. Consequently, by partition plate 40 after movement and the portion of filter 60 compressed thereby, the function as a pressure bulkhead can be substantially ensured, with the result that the internal pressure in gas generating agent storing chamber 16 is highly maintained while filter 60 is prevented from being damaged. Therefore, partition plate 40 can fully function as a pressure bulkhead even without subjecting cylindrical member 11 to the caulking process for fixing partition plate 40.

Furthermore, in cylinder-shaped gas generator 1A in the present embodiment, cylindrical portion 42 of partition plate 40 is configured so as to cover only the vicinity of the end of filter 60 closer to gas generating agent storing chamber 16. Therefore, the internal area of filter 60 corresponding to the portion located in region R2 shown in Fig. 3(B) is maintained in the state where a sufficient gap is provided. Accordingly, the combustion gas can smoothly flow in the above-described portion without influence of movement of partition plate 40 and deformation of filter 60 as described above. Therefore, the functions of filter 60 to cool the combustion gas and collect slag are not impaired.

Furthermore, cylinder-shaped gas generator 1A in the present embodiment is configured such that, when partition plate 40 and filter 60 are projected in the axial direction of cylindrical member 11 onto the plane orthogonal to this axis, the inner edge of the region onto which filter 60 is projected is located outside of the inner edge of the region onto which partition plate 40 is projected. In other words, as seen from gas generating agent storing chamber 16 in plan view of partition plate 40 and filter 60, the relative positional relationship between partition plate 40 and filter 60 is adjusted such that filter 60 is completely covered by partition plate 40. The above-described configuration causes the combustion gas of high temperature and high pressure having passed through communication hole 43 of partition plate 40 to flow along the inner circumferential surface of filter 60. Consequently, the rate of spraying the combustion gas directly onto filter 60 can be significantly decreased.

Furthermore, in cylinder-shaped gas generator 1A in the present embodiment, as described above, gas generating agent 52 is enclosed in first airtight container 80, and first airtight container 80 is brought into contact with annular plate portion 41 of partition plate 40 to be held. According to the above-described configuration, the contact portion between the outer circumferential surface of annular plate portion 41 of partition plate 40 and the inner circumferential surface of cylindrical member 11 (a gap formed between the outer circumferential surface of annular plate portion 41 of partition plate 40 and the inner circumferential surface of cylindrical member 11 in the case where partition plate 40 is loosely fit into cylindrical member 11) is covered by first airtight container 80. Accordingly, it becomes possible to prevent, even during actuation, the combustion gas from being leaked through this portion and discharged through gas discharge opening 12 to the outside without passing though filter 60. Therefore, a cylinder-shaped gas generator capable of providing a stable gas output can be provided by employing the above-described configuration.

In addition, in cylinder-shaped gas generator 1A in the present embodiment, partition plate 40 is held by a portion of filter 60 located in the above-described region R1 during actuation. This eliminates the need to design partition plate 40 such that only partition plate 40 may be used to resist the thrust force of the combustion gas, thereby allowing the thickness to be decreased as compared with the conventional case. Specifically, in consideration of the specifications of a commonly-used cylinder-shaped gas generator, when a steel material is used as partition plate 40, it is sufficient to design the steel plate to have a thickness of approximately 0.7 mm or more.

As described above, when the configuration as in cylinder-shaped gas generator 1A in the present embodiment is employed, it is not necessary to subject housing 10 to the caulking process for attachment of partition plate 40, and it also becomes possible to reduce partition plate 40 in thickness. Accordingly, as compared with the conventional case, the cylinder-shaped gas generator can be reduced in length, diameter and weight on the whole without deteriorating the performance. Furthermore, the above-described configuration is employed to thereby allow elimination of the caulking process for partition plate 40 onto housing 10, and also allow a reduction in the manufacturing cost. Therefore, the cylinder-shaped gas generator can be provided that can be reduced in size and weight and readily manufactured without deteriorating the performance.

### [Second Embodiment]

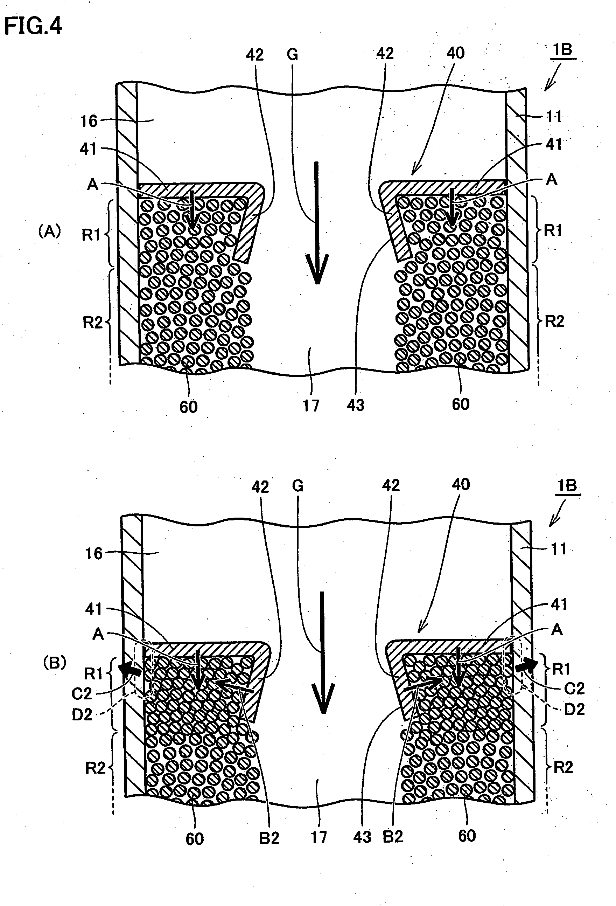

Fig. 4 is a main-part enlarged cross-sectional view showing an enlarged portion in the vicinity of the position in which the partition plate of the cylinder-shaped gas generator in the second embodiment of the present invention is provided. Fig. 4(A) is a diagram showing the state immediately after the start of actuation of the cylinder-shaped gas generator. Fig. 4(B) is a diagram showing the state after a lapse of a prescribed time period from the start of actuation. A cylinder-shaped gas generator 1B in the present embodiment is different only in the structure and the installation structure of partition plate 40 from cylinder-shaped gas generator 1A in the above-described first embodiment of the present invention, but identical in other configurations to cylinder-shaped gas generator 1A. Therefore, description of the identical configuarions will not be repeated. In Figs. 4(A) and 4(B), an arrow G indicates the direction in which the combustion gas flows.

As shown in Fig. 4(A), partition plate 40 of cylinder-shaped gas generator 1B in the present embodiment has annular plate portion 41, cylindrical portion 42, and communication hole 43. Annular plate portion 41 covers the end face of filter 60 closer to gas generating agent storing chamber 16. Cylindrical portion 42 continuously extends from the inner circumferential edge of annular plate portion 41 into hollow portion 61 of filter 60 and covers the inner circumferential surface of filter 60 closer to the end face. Communication hole 43 is defined by the inner circumferential surface of cylindrical portion 42, and provides communication between gas generating agent storing chamber 16 and filter chamber 17. Then, cylindrical portion 42 is configured to have a conical plate shape that is gradually increased in diameter such that the opening area of communication hole 43 is increased in accordance with an increase in the distance from annular plate portion 41 (in accordance with an increase in the distance from gas generating agent storing chamber 16 and with a decrease in the distance from the end of cylindrical portion 42).

Partition plate 40 is fit or loosely fit into cylindrical member 11. Thus, cylindrical member 11 is not subjected to the caulking process for fixing partition plate 40. The term "fit" includes so-called press fit, and means the state where the outer circumferential edge of annular plate portion 41 of partition plate 40 is attached in contact with the inner circumferential surface of cylindrical member 11. Furthermore, the terms "loosely fit" means the state where the outer circumferential edge of annular plate portion 41 of partition plate 40 and the inner circumferential surface of cylindrical member 11 are not necessarily in contact with each other over the entire circumference, but are inserted with a little gap (allowance in mechanical fixing).

Partition plate 40 is attached to the end of filter 60 closer to gas generating agent storing chamber 16. Partition plate 40 is sandwiched between filter 60 and first airtight container 80 storing the above-described gas generating agent 52, so that it is supported within cylindrical member 11. In addition, partition plate 40 is formed by presswork of the plate member made of metal such as stainless steel, steel, an aluminum alloy, and a stainless steel alloy, for example.

Also in the case where the configuration and installation structure of partition plate 40 as in the present embodiment are employed, partition plate 40 functions as a pressure bulkhead maintaining the internal pressure in gas generating agent storing chamber 16 and preventing damage to filter 60, as in the case where cylinder-shaped gas generator 1A in the above-described first embodiment is employed. The reasons thereof will be hereinafter described in detail.

As shown in Fig. 4(A), immediately after the start of actuation of cylinder-shaped gas generator 1B, when receiving the thrust force of the combustion gas of high temperature and high pressure generated in gas generating agent storing chamber 16 (that is, the pressure produced in accordance with a rise in the internal pressure of gas generating agent housing chamber 16, the force indicated by an arrow A in the figure), annular plate portion 41 of partition plate 40 receives the force in the axial direction of cylindrical member 11 toward filter 60. Consequently, annular plate portion 41 of partition plate 40 starts to move toward filter 60. This movement of annular plate portion 41 causes compression, in the axial direction of cylindrical member 11, of the portion of filter 60 surrounded by partition plate 40 and cylindrical member 11 (that is, the portion in the vicinity of the end of filter 60 closer to gas generating agent storing chamber 16, the portion included in a region R1 shown in the figure).

Thus, filter 60 is provided with a gap therewithin that is formed by winding a metal wire material or a mesh material having a metal wire material interwoven therewith, or by compressing the same by presswork. In this case, as shown in Fig. 4(B), the volume of the gap is decreased in accordance with the above-described movement of annular plate portion 41. In addition, while the metal wire material is further densely filled in region R1, it tends to expand in the radial direction of cylindrical member 11, thereby generating a force to cause cylindrical portion 42 of partition plate 40 to be squeezed inwardly in the radial direction of cylindrical member 11. However, cylindrical portion 42 of partition plate 40 is applied with a force approximately in the radial direction of cylindrical member 11 toward the outside in accordance with an increase in the internal pressure as described above (the force indicated by an arrow B2 shown in the figure). Accordingly, this force overwhelms the force causing cylindrical portion 42 of partition plate 40 to be squeezed inwardly in the radial direction of cylindrical member 11. In addition, its reaction force (the force indicated by an arrow C2 in the figure) is to be added to the contact portion between cylindrical member 11 and filter 60 (a region D1 shown in the figure). This causes a frictional force to be produced in the contact portion between cylindrical member 11 and filter 60. This frictional force then serves as a brake force for suppressing further movement of partition plate 40 toward filter 60.

In this case, the reaction force (the force indicated by arrow C2 in the figure) serves to act in the direction orthogonal to the radial direction and the axial direction of cylindrical member 11. Accordingly, the reaction force is to act as a high brake force that prevents movement of partition plate 40 in a wide range of cylindrical member 11, which results in a slight amount of movement of partition plate 40 based on this brake force. Consequently, by partition plate 40 after movement and the portion of filter 60 compressed thereby, the function as a pressure bulkhead can be substantially ensured, with the result that the internal pressure in gas generating agent storing chamber 16 is highly maintained while filter 60 is prevented from being damaged. Therefore, partition plate 40 can fully function as a pressure bulkhead even without subjecting cylindrical member 11 to the caulking process for fixation of partition plate 40.

Furthermore, in cylinder-shaped gas generator 1B in the present embodiment, cylindrical portion 42 of partition plate 40 is configured so as to cover only the vicinity of the end of filter 60 closer to gas generating agent storing chamber 16. Therefore, the internal area of filter 60 corresponding to the portion located in region R2 shown in Fig. 4(B) is maintained in the state where a sufficient gap is provided. Accordingly, the combustion gas can smoothly flow in the above-described portion without influence of movement of partition plate 40 and deformation of filter 60 as described above. Therefore, the functions of filter 60 to cool the combustion gas and collect slag are not impaired.

Furthermore, cylinder-shaped gas generator 1B in the present embodiment is configured such that, when partition plate 40 and filter 60 are projected in the axial direction of cylindrical member 11 onto the plane orthogonal to this axis, the inner edge of the region onto which filter 60 is projected is located outside of the inner edge of the region onto which partition plate 40 is projected. In other words, as seen from gas generating agent storing chamber 16 in plan view of partition plate 40 and filter 60, the relative positional relationship between partition plate 40 and filter 60 is adjusted such that filter 60 is completely covered by partition plate 40. The above-described configuration causes the combustion gas of high temperature and high pressure having passed through communication hole 43 of partition plate 40 to flow along the inner circumferential surface of filter 60. Consequently, the rate of spraying the combustion gas directly onto filter 60 can be significantly decreased.

In addition, in cylinder-shaped gas generator 1B in the present embodiment, partition plate 40 is held by a portion of filter 60 located in the above-described region R1 during actuation. This eliminates the need to design partition plate 40 such that only partition plate 40 may be used to resist the thrust force of the combustion gas, thereby allowing the thickness to be decreased as compared with the conventional case. Specifically, in consideration of the specifications of a commonly-used cylinder-shaped gas generator, when a steel material is used as partition plate 40, it is sufficient to design the steel plate to have a thickness of approximately 0.7 mm or more.

In addition, in the case where the configuration as in cylinder-shaped gas generator 1B in the present embodiment is employed, partition plate 40 can be installed and fixed to filter 60 in advance prior to installation of filter 60 in housing 10. Accordingly, the number of installation parts that should be directly installed in housing 10 can be reduced, which allows facilitation of the installation operation and reduction in the manufacturing cost.

### [Third Embodiment]

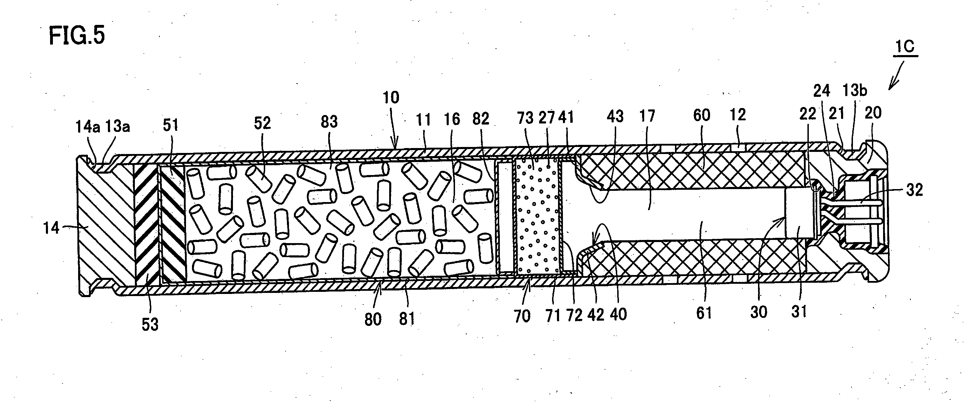

Fig. 5 is a diagram showing the inner structure of the cylinder-shaped gas generator in the third embodiment of the present invention. Referring to Fig. 5, a cylinder-shaped gas generator 1C in the present embodiment will then be described. In addition, the same components as those of cylinder-shaped gas generator 1A in the above-described first embodiment of the present invention are designated by the same reference characters, and description thereof will not be repeated.

As shown in Fig. 5, cylinder-shaped gas generator 1C in the present embodiment has an elongated and approximately cylindrical outer shape, and also has housing 10 as an outer shell member. Housing 10 includes cylindrical member 11, closing member 14, and holder 20. Cylinder-shaped gas generator 1C defined by these cylindrical member 11, closing member 14 and holder 20 has an inner space provided with gas generating agent storing chamber 16 and filter chamber 17. Mainly, igniter 30, enhancer agent 27, gas generating agent 52, and filter 60 are stored and arranged in this space. Gas generating agent storing chamber 16 and filter chamber 17 are formed by partitioning the space within housing 10 by partition plate 40 stored and disposed within housing 10.

While cylinder-shaped gas generator 1A in the above described first embodiment of the present invention is configured such that igniter 30, gas generating agent 52 and filter 60 are arranged in this order from one end to the other end in the axial direction of housing 10, cylinder-shaped gas generator 1C in the present embodiment is configured such that igniter 30, filter 60 and gas generating agent 52 are arranged in this order from one end toward the other end in the axial direction of housing 10. In other words, in cylinder-shaped gas generator 1C in the present embodiment, igniter 30 is disposed in the position closer to one end of housing 10 in the axial direction, gas generating agent storing chamber 16 is disposed in the position closer to the other end of housing 10 in the axial direction, and filter chamber 17 is disposed in the position closer to the above-mentioned one end of housing 10 than gas generating agent storing chamber 16.

Igniter (squib) 30 is disposed within hollow portion 22 of holder 20 forming one end of housing 10 in the axial direction. A resin molded portion 24 is located between holder 20 and igniter 30. The installation structure of igniter 30 through resin molded portion 24 in holder 20 is similar to that of cylinder-shaped gas generator 1A in the above-described first embodiment.

Filter chamber 17 is formed in the region adjacent to holder 20 in the space within housing 10, and filter 60 is disposed in filter chamber 17. Filter chamber 17 is defined mainly by cylindrical member 11, holder 20 and partition plate 40, and provided approximately in the middle portion of housing 10. Filter 60 is made of a cylindrical member having hollow portion 61 extending in the same direction as the axial direction of housing 10. Filter 60 has an end in the axial direction that is pressed against holder 20 and brought into contact therewith, in which ignition portion 31 of igniter 30 is received by hollow portion 61 at this end in the axial direction. The portion of the circumferential wall of cylindrical member 11 corresponding to the region where filter 60 is disposed is provided with a plurality of gas discharge openings 12 (for example, about 6 to 15 gas discharge openings each having a diameter of 2.5 mm to 3.5 mm) in the circumferential direction and the axial direction of cylindrical member 11.

Partition plate 40 corresponds to a partition member for partitioning the space within housing 10 into gas generating agent storing chamber 16 and filter chamber 17 in the axial direction. Partition plate 40 is disposed so as to be brought into contact with filter 60 at the boundary portion between gas generating agent storing chamber 16 and filter chamber 17. As in the case of cylinder-shaped gas generator 1A in the above-described first embodiment of the present invention, partition plate 40 includes annular plate portion 41 having a main surface orthogonal to the axis of housing 10; cylindrical portion 42 continuously extending from the inner circumferential edge of annular plate portion 41 in the direction away from the above-described first airtight container 80; and communication hole 43 defined by cylindrical portion 42 and providing communication between gas generating agent storing chamber 16 and filter chamber 17.

Annular plate portion 41 covers the end face of filter 60 closer to gas generating agent storing chamber 16 while cylindrical portion 42 continuously extends from the inner circumferential edge of annular plate portion 41 into hollow portion 61 of filter 60, to cover the inner circumferential surface of filter 60 closer to the end face. Communication hole 43 is defined by the inner circumferential surface of cylindrical portion 42, and provides communication between gas generating agent storing chamber 16 and filter chamber 17. Then, cylindrical portion 42 is configured in the shape of a conical plate that is gradually decreased in diameter such that the opening area of communication hole 43 is decreased in accordance with an increase in the distance from annular plate portion 41 (in accordance with an increase in the distance from gas generating agent storing chamber 16 and with a decrease in the distance from the end of cylindrical portion 42).

Partition plate 40 is fit or loosely fit into cylindrical member 11. Thus, cylindrical member 11 is not subjected to the caulking process for fixing partition plate 40. The term "fit" includes so-called press fit, and means the state where the outer circumferential edge of annular plate portion 41 of partition plate 40 is attached in contact with the inner circumferential surface of cylindrical member 11. Furthermore, the terms "loosely fit" means the state where the outer circumferential edge of annular plate portion 41 of partition plate 40 and the inner circumferential surface of cylindrical member 11 are not necessarily in contact with each other over the entire circumference, but are inserted with a little gap (allowance in mechanical fixing).

Partition plate 40 is attached to the end of filter 60 closer to gas generating agent storing chamber 16. Partition plate 40 is sandwiched between filter 60 and second airtight container 70 storing enhancer agent 27, so that it is supported within cylindrical member 11.

Gas generating agent storing chamber 16 is provided in the region in the space within housing 10 that is adjacent to filter 60 on the side opposite to the side on which holder 20 is located. Gas generating agent storing chamber 16 is mainly defined by cylindrical member 11, closing member 14 and partition plate 40, and disposed in the portion of housing 10 closer to closing member 14 (the portion on the left side in the figure). Gas generating agent storing chamber 16 is provided with second airtight container 70 enclosing a plurality of granular enhancer agents 27, first airtight container 80 enclosing a plurality of granular gas generating agents 52, and a cushion member 53 in this order from the side on which filter 60 is located. These second airtight container 70, first airtight container 80 and cushion member 53 are inserted into cylindrical member 11.

In addition to the plurality of granular gas generating agents 52 as described above, cushion member 51 is stored in storage space 83 of first airtight container 80. More specifically, cushion member 51 is disposed in the end portion in storage space 83 of first airtight container 80 on the side on which closing member 14 is located, and the plurality of granular gas generating agents 52 are stored so as to fill remaining storage space 83 in first airtight container 80.

In gas generating agent storing chambers 16, cushion member 53 is disposed outside of first airtight container 80 and between first airtight container 80 and closing member 14. This cushion member 53 serves as a member for fixing the above-described various kinds of internal components in the axial direction within housing 10, and also for accommodating the variations of the axial length of the above-described internal components. Cushion member 53 is sandwiched between closing member 14 forming the other end of housing 10 in the axial direction and first airtight container 80. As cushion member 53, a molded body made of a ceramic fiber, foamed silicon, and the like can be applied, for example.

Then, the operation during the actuation of cylinder-shaped gas generator 1C described above will be described. When there is a collision of a vehicle equipped with an air bag apparatus having cylinder-shaped gas generator 1C in the present embodiment incorporated therein, the collision detection unit separately provided in the vehicle detects the collision. Based on this detection, igniter 30 is actuated. When igniter 30 is actuated, the pressure within ignition portion 31 is raised by combustion of the ignition charge, which causes explosion of ignition portion 31. Consequently, flame flows out of ignition portion 31.

The flame discharged from ignition portion 31 to the outside flows through hollow portion 61 of filter 60 and reaches second airtight container 70, to melt or explode this second airtight container 70. Consequently, enhancer agent 27 stored in second airtight container 70 is ignited and burned by the flame produced by actuation of igniter 30, thereby generating a great amount of hot particles.

The great amount of generated hot particles reach first airtight container 80, to melt or explode this first airtight container 80. Consequently, gas generating agent 52 is fired and burned, so that a great amount of combustion gas is generated. The generated combustion gas flows through hollow portion 61 of filter 60 in the axial direction of housing 10. The flow direction of the combustion gas is then changed, and the combustion gas flows into filter 60. When the combustion gas flows through filter 60, it is cooled to a prescribed temperature. Then, the combustion gas is discharged through gas discharge opening 12 to the outside of cylinder-shaped gas generator 1C. The combustion gas discharged from gas discharge opening 12 is guided into the air bag for inflating and expanding the air bag.

Cylinder-shaped gas generator 1C in the present embodiment as described above can also achieve the same effects as those achieved by cylinder-shaped gas generator 1A in the first embodiment of the present invention as described above. In other words, the configuration similar to that of cylinder-shaped gas generator 1C in the present embodiment allows partition plate 40 to sufficiently function as a pressure bulkhead at the time of actuation. Consequently, the internal pressure in gas generating agent storing chamber 16 is maintained high, thereby achieving the effect of facilitating combustion of gas generating agent 52.

Furthermore, in the case of cylinder-shaped gas generator 1C in the present embodiment, combustion of gas generating agent 52 can be started from the end closer to igniter 30 in the region in which gas generating agent 52 is stored. Accordingly, it becomes possible not only to decrease the distance between filter 60 and the position where the combustion gas is generated at the early stage of actuation, but also to prevent the flow of the generated combustion gas from being blocked by the unburned gas generating agent and the like. This also allows the generated combustion gas to immediately flow into the region having filter 60 stored therein, and then flow through filter 60, so that the combustion gas can be discharged through gas discharge opening 12 to the outside of housing 10.

In addition, also in the case of the configuration as in cylinder-shaped gas generator 1C in the present embodiment in which filter chamber 17 is disposed between igniter 30 and gas generating agent storing chamber 16, partition plate 40 as in the second embodiment of the present invention as described above can be employed as a partition member disposed in the boundary portion between gas generating agent storing chamber 16 and filter chamber 17. When partition plate 40 as in the second embodiment of present invention is employed, partition plate 40 can be installed and fixed to filter 60 in advance prior to installation of filter 60 in housing 10. Accordingly, the number of the installation parts that should be directly installed in housing 10 can be reduced, which allows facilitation of the installation operation and reduction in the manufacturing cost.

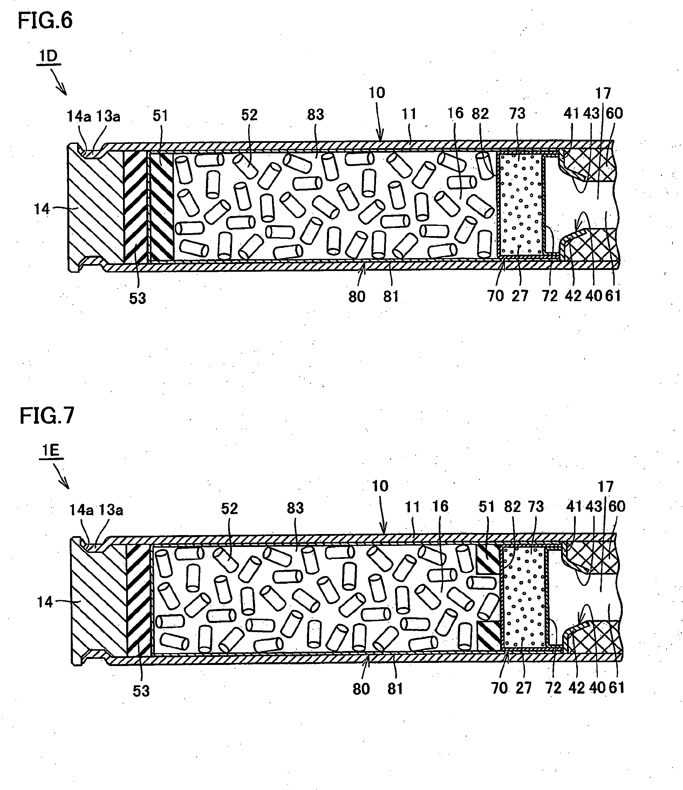

Figs. 6 and 7 each are a schematic cross-sectional view showing the inner structure of the cylinder-shaped gas generator according to each of the first and second modifications in the present embodiment. Referring to Figs. 6 and 7, cylinder-shaped gas generators 1D and 1E according to the first and the second modifications in the present embodiment will then be described in detail.

As shown in Fig. 6, the difference between cylinder-shaped gas generator 1D according to the first modification and cylinder-shaped gas generator 1C according to the above-described present embodiment lies in the configuration of first airtight container 80 and second airtight container 70 stored and disposed in gas generating agent storing chamber 16. Specifically, cylinder-shaped gas generator 1C in the above-described present embodiment is configured such that first airtight container 80 storing gas generating agent 52 and second airtight container 70 storing enhancer agent 27 are separately formed and arranged side by side in the axial direction within housing 10. In contrast, cylinder-shaped gas generator 1D according to the present modification is configured such that second airtight container 70 storing enhancer agent 27 is enclosed within first airtight container 80 storing gas generating agent 52. In this case, cap portion 82 of first airtight container 80 also serves as a cup portion of second airtight container 70. According to the above-described configuration, an effect of allowing facilitation of the assembly operation to be achieved, in addition to the effect that can be achieved in the case of cylinder-shaped gas generator 1C in the above-described present embodiment.

As shown in Fig. 7, the difference between cylinder-shaped gas generator 1E according to the second modification and cylinder-shaped gas generator 1D according to the above-described first modification lies in the position where cushion member 51 as a crush preventing member is disposed. Specifically, cylinder-shaped gas generator 1D according to the above-described first modification is configured such that cushion member 51 is disposed at the end of first airtight container 80 closer to closing member 14. In contrast, cylinder-shaped gas generator 1E according to the present modification is configured such that cushion member 51 is disposed at the end of first airtight container 80 closer to filter 60. Also in the configuration as described above, when an opening is provided approximately in the middle portion of cushion member 51 as shown in Fig. 7, the flow of the combustion gas generated at the early stage of actuation can be prevented from being blocked by cushion member 51. Accordingly, the same effects as those achieved in the case of cylinder-shaped gas generator 1D according to the above-described second modification can be achieved.

### [Fourth Embodiment]

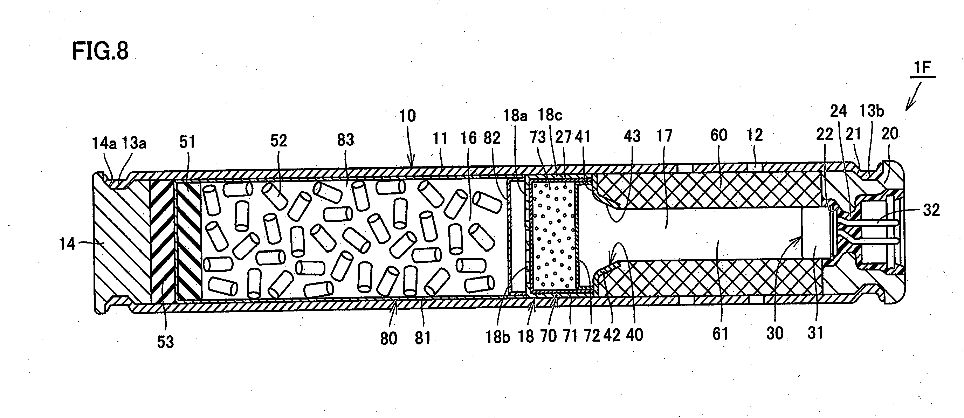

Fig. 8 is a schematic cross-sectional view showing the inner structure of the cylinder-shaped gas generator according to the fourth embodiment of the present invention. Referring to Fig. 8, the inner structure of a cylinder-shaped gas generator 1F in the present embodiment will be hereinafter described. It is to be noted that the components identical to those in cylinder-shaped gas generator 1C in the above-described third embodiment of the present invention are designated by the same reference characters, and description thereof will not be repeated.

As shown in Fig. 8, cylinder-shaped gas generator 1F in the present embodiment has a perforated plate 18 at the prescribed position within gas generating agent storing chamber 16. Perforated plate 18 has a cylindrical shape having a bottom and also has a bottom plate portion 18b provided with a plurality of through holes 18a. Perforated plate 18 is inserted into cylindrical member 11 such that bottom plate portion 18b is located between first airtight container 80 storing gas generating agent 52 and second airtight container 70 storing enhancer agent 27, in which case the edge of a circumferential wall portion 18c is brought into contact with partition plate 40 and held therein.

Through holes 18a provided in perforated plate 18 each are formed smaller than the outer shape of gas generating agent 52. Perforated plate 18 serves as an entry preventing member for preventing entry of gas generating agent 52 into filter chamber 17. Perforated plate 18 is suitably made of a metal member such as stainless steel, steel, an aluminum alloy, and a stainless steel alloy. Furthermore, perforated plate 18 also serves to adjust the flow of the combustion gas which passes through perforated plate 18 at the time of actuation.

When the configuration as in cylinder-shaped gas generator 1F in the present embodiment described above is employed, it becomes possible to achieve the effect that can block gas generating agent 52 by perforated plate 18 at the time of actuation to thereby prevent gas generating agent 52 from moving toward filter chamber 17, in addition to the effect achieved in the case of cylinder-shaped gas generator 1C in the above-described third embodiment of the present invention. Accordingly, the internal pressure in the portion of gas generating agent storing chamber 16 storing gas generating agent 52 can be maintained high, thereby allowing further facilitation of combustion of gas generating agent 52. In addition, when bottom plate portion 18b of perforated plate 18 is disposed between first airtight container 80 storing gas generating agent 52 and second airtight container 70 storing enhancer agent 27, ignition of enhancer agent 27 by igniter 30 is not inhibited by perforated plate 18. Accordingly, deterioration of the ignition performance can also be prevented. Therefore, when the above-described configuration is employed, a cylinder-shaped gas generator having a high performance and allowing an easy adjustment of the gas output can be provided.

### Examples

The details and the results of the verification test conducted for confirming the effects achieved by the present invention will be hereinafter described. In the verification test described below in detail, cylinder-shaped gas generators 1A and 1B in the above-described first and second embodiments were actually produced experimentally as Examples 1 and 2, respectively. In addition, Comparative Example for comparison therewith was also actually produced experimentally for comparisons between the results. In the cylinder-shaped gas generator according to Comparative Example, the smaller angle (internal angle) of the angles formed between the annular plate portion and the cylindrical portion of the partition plate was set at 90°. In the cylinder-shaped gas generator according to Example 1, the internal angle as described above was set at 94°. In the cylinder-shaped gas generator according to Example 2, the internal angle was set at 86°.

In the cylinder-shaped gas generator according to each of Examples 1 and 2 and Comparative Example, the same conditions were used except for the above-described internal angles. In this case, the partition plate was made of steel materials (SS400) to have a thickness of 0.8 mm, and the outer diameter of the annular plate portion was set at φ 16.4 mm. In addition, the axial length of the cylindrical portion was 4 mm, and each minimum inner diameter of the cylindrical portion was φ 8 mm. Furthermore, the filter having this partition plate attached thereto was obtained by compressing a stockinette iron wire plated with copper (SWRM4) by presswork, to achieve a density of 4.0 g/cc. In this case, the axial length was 31 mm, and the inner diameter of the hollow portion other than the portion having the partition plate inserted thereinto was φ 8 mm. Furthermore, the shape of the filter corresponding to the portion having the cylindrical portion of the partition plate inserted thereinto was almost identical to that of the cylindrical portion of the partition plate. The partition plate was loosely fit into the filter for attachment by merely inserting the cylindrical portion of the partition plate into the hollow portion of the filter. Furthermore, the gas generator was configured to have an outer diameter of 20.0 mm, an inner diameter of 16.6 mm, and an entire length of 122.0 mm.

The cylinder-shaped gas generator was actually actuated on the above-described conditions, to confirm whether or not the partition plate functioned as a pressure bulkhead, that is, any unintentional deformation occurred in the filter. As a result, in each of Examples 1 and 2, it was confirmed that the amount of movement of the partition plate (that is, the amount of movement of the partition plate toward the filter before and after the actuation) was as small as 1 mm or less. Thus, it was confirmed that the portion of the filter surrounded between the partition plate and the cylindrical member was compressed. In contrast, in Comparative Example, it was found that the amount of movement of the partition plate was 4.5 mm or more, and thus, a large distortion was created entirely in the axial direction of the filter.

The above-described results show that, as in the cylinder-shaped gas generator in each of the above-described first and second embodiments of the present invention, it is prerequisite for the partition plate to function as a pressure bulkhead that the partition plate is decreased or increased in diameter such that the opening area of the communication hole is changed as the cylindrical portion continuously extending from the annular plate portion is away from the annular plate portion (that is, such that the cross-sectional area is not configured to have an uniform straight tubular shape in the axial direction). In other words, when the cylindrical portion of the partition plate as in Comparative Example is configured to have a straight tubular shape, the following presumption may be made. That is, the force added to the cylindrical portion of the partition plate in accordance with an increase in the internal pressure is produced in the radial direction of the cylindrical member. This results in a locally decreased brake force for the partition plate that is applied to the contact portion between the cylindrical member and the filter. In this case, the brake force is insufficient. Accordingly, the movement of the partition plate cannot be stopped, which leads to a significant damage to the filter. Therefore, it was confirmed that the configuration as in the cylinder-shaped gas generator in each of the above-described first and second embodiments of the present invention finally allows the partition plate to function as a pressure bulkhead without caulking fixation of the partition plate.

In the first to fourth embodiments of the present invention as described above, the explanation has been made by illustrating the case where the cylindrical portion of the partition plate is formed in the shape of a conical plate. However, the shape of the cylindrical portion is not limited thereto, but may be configured to have a cylindrical portion that is curved in cross section, for example. In any case, the cylindrical portion only needs to be configured to have a shape that allows the force applied to the cylindrical portion in accordance with an increase in the internal pressure to be exerted in the direction orthogonal to each of the radial direction and the axial direction of the cylindrical member. It is also preferable that the inner circumferential surface of the cylindrical portion is not disposed in parallel with the axial direction of the housing.

Furthermore, in the first and second embodiments of the present invention, the explanation has been made by illustrating the cylinder-shaped gas generator using the filter having a hollow portion formed therein that extends to both ends in the axial direction. However, it is possible to use the filter having a shape in which at least a hollow portion extends to the end face closer to the gas generating agent storing chamber. It is also possible to use the filter having a shape in which the hollow portion does not extend to the end face closer to the closing member.

Furthermore, in the first to fourth embodiments of the present invention, the explanation has been made by illustrating the cylinder-shaped gas generator in which the enhancer agent and the gas generating agent are stored in the airtight container. However, these enhancer agent and gas generating agent are not necessarily stored in the airtight container, but may be directly packed and stored in the cup-shaped member and the cylindrical member. In that case, the housing itself needs to be airtightly sealed separately so as to prevent these enhancer agent and gas generating agent from absorbing moisture.

Furthermore, in the first to fourth embodiments of the present invention, the explanation has been made by illustrating the cylinder-shaped gas generator in which an enhancer agent is packed in order to promote combustion of the gas generating agent. However, the enhancer agent is not necessarily provided. For example, packing of the enhancer agent can be eliminated by improvement of the sensitivity of the gas generating agent for starting combustion, and the like. Also in the case of the configuration in which the enhancer agent is packed in the cylinder-shaped gas generator, the enhancer agent can also be installed integrally with the igniter.

Furthermore, in the first to fourth embodiments of the present invention, the explanation has been made by illustrating the case where the present invention is applied to the cylinder-shaped gas generator incorporated in the side air bag apparatus. However, the subject to which the present invention is applied is not limited thereto, but the present invention may also be applied to a cylinder-shaped gas generator incorporated in the air bag apparatus for passenger seat or a so-called T-shaped gas generator having an elongated gas output unit as in the cylinder-shaped gas generator.

In addition, the characteristic configuration of the cylinder-shaped gas generator shown in the each of the first to fourth embodiments of the present invention can be obviously combined with one another in the range allowable in terms of the apparatus configuration.

Each embodiment and its modification disclosed herein are illustrative and non-restrictive in every respect. The technical scope of the present invention is defined by the terms of the claims, and is intended to include any modifications within the scope and meaning equivalent to the terms of the claims.

### DESCRIPTION OF THE REFERENCE SIGNS

1A to 1F cylinder-shaped gas generator, 10 housing, 11 cylindrical member, 12 gas discharge opening, 13a to 13c caulking portion, 14 closing member, 14a groove, 14b protrusion, 14c recess, 15 ignition chamber, 16 gas generating agent storing chamber, 17 filter chamber, 18 perforated plate, 18a through hole, 18b bottom plate portion, 18c circumferential wall portion, 20 holder 21, groove, 22 through portion, 24 resin molded portion, 25 cup-shaped member, 25a opening, 27 enhancer agent, 30 igniter, 31 ignition portion, 32 terminal pin, 40 partition plate, 41 annular plate portion, 42 cylindrical portion, 43 communication hole, 51 cushion member, 52 gas generating agent, 60 filter, 61 hollow portion, 70 second airtight container, 71 cup portion, 72 cap portion, 73 storage space, 80 first airtight container, 81 cup portion, 82 cap portion, 83 storage space.

## Claims

1. A gas generator comprising:
a housing (10) having an elongated cylindrical shape and including a gas generating agent storing chamber (16) storing a gas generating agent (52) and a filter chamber (17) storing a filter (60);
a partition member (40) inserted into said housing (10) and partitioning a space within said housing (10) into said gas generating agent storing chamber (16) and said filter chamber (17) in an axial direction; and
an igniter (30) installed in said housing (10) and actuated to generate flame for burning said gas generating agent (52),
said housing (10) having a portion that defines said filter chamber (17) and has a gas discharge opening (12) for discharging gas,
said filter (60) being made of a member having a hollow portion (61) extending in the axial direction of said housing (10) and extending at least to an end face closer to said gas generating agent storing chamber (16),
said partition member (40) including an annular plate portion (41) covering the end face of said filter (17) closer to said gas generating agent storing chamber (16), a cylindrical portion (42) continuously extending from an inner circumferential edge of said annular plate portion (41) into said hollow portion (61) of said filter (60) and covering an inner circumferential surface of said filter (60) closer to said end face, and a communication hole (43) providing communication between said gas generating agent storing chamber (16) and said filter chamber (17),
wherein
said communication hole (43) provided in the partition member (40) is only a single communication hole (43) defined by an inner circumferential surface of said cylindrical portion (42) and has an opening area changed in accordance with an increase in a distance from said annular plate portion (41)
**characterized in that**
at least part of the annular plate portion (41) of the partition member (40) directly faces the gas generating agent storing chamber (16), without having another member interposed therebetween, in the axial direction of the housing (10) such that the partition member defines an end of the gas generating agent storing chamber (16) closer to the filter chamber (17).

2. The gas generator according to claim 1, wherein said cylindrical portion (42) is gradually decreased in diameter such that the opening area of said communication hole (43) is decreased in accordance with an increase in the distance from said annular plate portion (41).

3. The gas generator according to claim 1, wherein said cylindrical portion (42) is gradually increased in diameter such that the opening area of said communication hole (43) is increased in accordance with an increase in the distance from said annular plate portion (41).

4. The gas generator according to claim 1, wherein said partition member (40) is fit into said housing (10).

5. The gas generator according to claim 1, wherein said partition member (40) is loosely fit into said housing (10).

6. The gas generator according to claim 1, wherein said filter (60) is obtained by compressing a metal wire material in a cylindrical shape so as to provide a gap therein.

7. The gas generator according to claim 1, wherein, when said partition member (40) and said filter (60) are projected in the axial direction of said housing (10) onto a plane orthogonal to the axial direction, an inner edge of a region onto which said filter (60) is projected is located outside of an inner edge of a region onto which said partition member (40) is projected.

8. The gas generator according to claim 1, wherein said gas generating agent (52) is enclosed in a first airtight container (80) inserted into said housing (10) and located within said gas generating agent storing chamber (16).

9. The gas generator according to claim 1, further comprising an enhancer agent (27) used for transferring the flame generated by actuation of said igniter (30) to said gas generating agent (52), wherein
said enhancer agent (27) is enclosed in a second airtight container (70) inserted into said housing (10).

10. The gas generator according to claim 1, wherein
said igniter (30) is disposed at one end of said housing (10) in the axial direction so as to face the space within said housing (10),
said filter (60) is disposed in a position in the space within said housing (10) closer to an other end of said housing (10) in the axial direction, and
said gas generating agent (52) is disposed in a position closer to said one end of said housing (10) than the position where said filter (60) is disposed.

11. The gas generator according to claim 1, wherein
said igniter (30) is disposed at one end of said housing (10) in the axial direction so as to face the space within said housing (10),
said gas generating agent (52) is disposed in a position in the space within said housing (10) closer to an other end of said housing (10) in the axial direction, and
said filter (52) is disposed in a position closer to said one end of said housing (10) than the position where said gas generating agent (60) is disposed.

## Patentansprüche

1. Gasgenerator mit:
einem Gehäuse (10), das eine längszylindrische Form aufweist und eine Gaserzeugungsmittelspeicherkammer (16) hat, die ein Gaserzeugungsmittel (52) speichert, und eine Filterkammer (17), die einen Filter (60) speichert;
einem Unterteilungselement (40), das in das Gehäuse (10) eingefügt ist und einen Raum innerhalb des Gehäuses (10) in einer axialen Richtung in die Gaserzeugungsmittelspeicherkammer (16) und die Filterkammer (17) unterteilt; und
einem Zünder (30), der in dem Gehäuse (10) installiert ist und betätigt wird, um eine Flamme zum Verbrennen des Gaserzeugungsmittels (52) zu erzeugen,
wobei das Gehäuse (10) einen Abschnitt aufweist, der die Filterkammer (17) definiert und eine Gasabgabeöffnung (12) zum Abgeben von Gas aufweist,
wobei der Filter (60) aus einem Element hergestellt ist, das einen hohlen Abschnitt (61) aufweist, der sich in der axialen Richtung des Gehäuses (10) erstreckt, und sich zumindest zu einer Endfläche näher an der Gaserzeugungsmittelspeicherkammer (16) erstreckt,
wobei das Unterteilungselement (40) einen ringförmigen Plattenabschnitt (41) hat, der die Endfläche des Filters (17) näher an der Gaserzeugungsmittelspeicherkammer (16) bedeckt, einen zylindrischen Abschnitt (42), der sich kontinuierlich von einer inneren Umfangskante des ringförmigen Plattenabschnitts (41) in den hohlen Abschnitt (61) des Filters (60) erstreckt und eine innere Umfangsoberfläche des Filters (60) näher an der Endfläche bedeckt, und eine Verbindungsbohrung (43), die eine Verbindung zwischen der Gaserzeugungsmittelspeicherkammer (16) und der Filterkammer (17) bereitstellt,
wobei
die in dem Unterteilungselement (40) bereitgestellte Verbindungsbohrung (43) lediglich eine einzelne Verbindungsbohrung (43) ist, die durch eine innere Umfangsoberfläche des zylindrischen Abschnitts (42) definiert ist und eine Öffnungsfläche aufweist, die gemäß einem Anstieg eines Abstands von dem ringförmigen Plattenabschnitt (41) ansteigt,
**dadurch gekennzeichnet, dass**
zumindest ein Teil des ringförmigen Plattenabschnitts (41) des Unterteilungselements (40) derart direkt zu der Gaserzeugungsmittelspeicherkammer (16) in der axialen Richtung des Gehäuses (10) gerichtet ist, ohne ein anderes Element dazwischen eingefügt aufzuweisen, dass das Unterteilungselement ein Ende der Gaserzeugungsmittelspeicherkammer (16) näher an der Filterkammer (17) definiert.

2. Gasgenerator nach Anspruch 1, wobei der zylindrische Abschnitt (42) in seinem Durchmesser allmählich derart verringert ist, dass die Öffnungsfläche der Verbindungsbohrung (43) gemäß einem Anstieg des Abstandes von einem ringförmigen Plattenabschnitt (41) verringert ist.

3. Gasgenerator nach Anspruch 1, wobei der zylindrische Abschnitt (42) allmählich in seinem Durchmesser derart erhöht ist, dass die Öffnungsfläche der Verbindungsbohrung (43) gemäß einem Anstieg des Abstandes von dem ringförmigen Plattenabschnitt (41) erhöht ist.

4. Gasgenerator nach Anspruch 1, wobei das Unterteilungselement (40) in das Gehäuse (10) gepasst ist.

5. Gasgenerator nach Anspruch 1, wobei das Unterteilungselement (40) lose in das Gehäuse (10) gepasst ist.

6. Gasgenerator nach Anspruch 1, wobei der Filter (60) durch Verdichten eines Metalldrahtmaterials in einer zylindrischen Form so erhalten wird, dass darin ein Spalt bereitgestellt ist.

7. Gasgenerator nach Anspruch 1, wobei, wenn das Unterteilungselement (40) und der Filter (60) in der axialen Richtung des Gehäuses (10) an einer Ebene rechtwinklig zu der axialen Richtung vorragen, eine innere Kante eines Bereichs, auf den der Filter (60) ragt, außerhalb einer inneren Kante eines Bereichs angeordnet ist, auf den das Unterteilungselement (40) ragt.

8. Gasgenerator nach Anspruch 1, wobei das Gaserzeugungsmittel (52) in einem ersten luftdichten Behälter (80) eingeschlossen ist, der in das Gehäuse (10) eingefügt ist, und innerhalb der Gaserzeugungsmittelspeicherkammer (16) angeordnet ist.

9. Gasgenerator nach Anspruch 1, außerdem mit einem Beschleunigungsmittel (27), das zum Übertragen der durch die Betätigung des Zünders (30) erzeugten Flamme zu dem Gaserzeugungsmittel (52) verwendet wird, wobei
das Beschleunigungsmittel (27) in einem zweiten luftdichten Behälter (72) eingeschlossen ist, der in das Gehäuse (10) eingefügt ist.

10. Gasgenerator nach Anspruch 1, wobei
der Zünder (30) an einem Ende des Gehäuses (10) in der axialen Richtung so vorgesehen ist, dass er innerhalb des Gehäuses (10) zu dem Raum gerichtet ist,
der Filter (60) in einer Position in dem Raum innerhalb des Gehäuses (10) näher an einem anderen Ende des Gehäuses (10) in der axialen Richtung vorgesehen ist,
das Gaserzeugungsmittel (52) in einer Position näher an dem einen Ende des Gehäuses (10) als die Position, an der der Filter (60) vorgesehen ist, vorgesehen ist.

11. Gasgenerator nach Anspruch 1, wobei
der Zünder (30) an einem Ende des Gehäuses (10) in der axialen Richtung so vorgesehen ist, dass er zu dem Raum innerhalb des Gehäuses (10) gerichtet ist,
das Gaserzeugungsmittel (52) in einer Position in dem Raum innerhalb des Gehäuses (10) näher an einem anderen Ende des Gehäuses (10) in der axialen Richtung vorgesehen ist, und
der Filter (52) in einer Position näher an dem einen Ende des Gehäuses (10) als die Position vorgesehen ist, an der das Gaserzeugungsmittel (60) vorgesehen ist.

## Revendications

1. Générateur de gaz comprenant :
un boîtier (10) ayant une forme cylindrique allongée et comportant une chambre de stockage d'agent de génération de gaz (16) stockant un agent de génération de gaz (52) et une chambre à filtre (17) stockant un filtre (60) ;
un élément de division (40) inséré dans ledit boîtier (10) et divisant un espace à l'intérieur dudit boîtier (10) en ladite chambre de stockage d'agent de génération de gaz (16) et ladite chambre à filtre (17) dans une direction axiale ; et
un allumeur (30) installé dans ledit boîtier (10) et actionné pour générer une flamme afin de brûler ledit agent de génération de gaz (52),
ledit boîtier (10) ayant une partie qui définit ladite chambre à filtre (17) et a une ouverture de décharge de gaz (12) pour décharger le gaz,
ledit filtre (60) étant réalisé en un élément ayant une partie creuse (61) s'étendant dans la direction axiale dudit boîtier (10) et s'étendant au moins à une face d'extrémité plus proche de ladite chambre de stockage d'agent de génération de gaz (16),
ledit élément de division (40) comportant une partie de plaque annulaire (41) couvrant la face d'extrémité dudit filtre (17) plus proche de ladite chambre de stockage d'agent de génération de gaz (16), une partie cylindrique (42) s'étendant en continu à partir d'un bord circonférentiel interne de ladite partie de plaque annulaire (41) dans ladite partie creuse (61) dudit filtre (60) et couvrant une surface circonférentielle interne dudit filtre (60) plus proche de ladite face d'extrémité, et un trou de communication (43) assurant une communication entre ladite chambre de stockage d'agent de génération de gaz (16) et ladite chambre à filtre (17),
où
ledit trou de communication (43) prévu dans l'élément de division (40) n'est qu'un trou de communication unique (43) défini par une surface circonférentielle interne de ladite partie cylindrique (42) et a une zone d'ouverture modifiée conformément à une augmentation d'une distance depuis ladite partie de plaque annulaire (41)
**caractérisé en ce que**
au moins une partie de la partie de plaque annulaire (41) de l'élément de division (40) fait directement face à la chambre de stockage d'agent de génération de gaz (16), sans avoir un autre élément interposé entre celles-ci, dans la direction axiale du boîtier (10) de sorte que l'élément de division définisse une extrémité de la chambre de stockage d'agent de génération de gaz (16) plus proche de la chambre à filtre (17).

2. Générateur de gaz selon la revendication 1, dans lequel ladite partie cylindrique (42) diminue progressivement en diamètre de sorte que la zone d'ouverture dudit trou de communication (43) diminue conformément à une augmentation de la distance depuis ladite partie de plaque annulaire (41).

3. Générateur de gaz selon la revendication 1, dans lequel ladite partie cylindrique (42) augmente progressivement en diamètre de sorte que la zone d'ouverture dudit trou de communication (43) augmente conformément à une augmentation de la distance depuis ladite partie de plaque annulaire (41).

4. Générateur de gaz selon la revendication 1, dans lequel ledit élément de division (40) est ajusté dans ledit boîtier (10).

5. Générateur de gaz selon la revendication 1, dans lequel ledit élément de division (40) est ajusté de manière lâche dans ledit boîtier (10).

6. Générateur de gaz selon la revendication 1, dans lequel ledit filtre (60) est obtenu par compression d'un matériau de fil métallique dans une forme cylindrique afin de fournir un interstice dedans.

7. Générateur de gaz selon la revendication 1, dans lequel, lorsque ledit élément de division (40) et ledit filtre (60) sont projetés dans la direction axiale dudit boîtier (10) sur un plan orthogonal à la direction axiale, un bord interne d'une région sur laquelle ledit filtre (60) est projeté est situé à l'extérieur d'un bord interne d'une région sur laquelle ledit élément de division (40) est projeté.

8. Générateur de gaz selon la revendication 1, dans lequel ledit agent de génération de gaz (52) est enfermé dans un premier récipient étanche à l'air (80) inséré dans ledit boîtier (10) et situé à l'intérieur de ladite chambre de stockage d'agent de génération de gaz (16).

9. Générateur de gaz selon la revendication 1, comprenant en outre un agent amplificateur (27) utilisé pour transférer la flamme générée par l'actionnement dudit allumeur (30) audit agent de génération de gaz (52), où
ledit agent amplificateur (27) est enfermé dans un deuxième récipient étanche à l'air (70) inséré dans ledit boîtier (10).

10. Générateur de gaz selon la revendication 1, dans lequel
ledit allumeur (30) est disposé au niveau d'une extrémité dudit boîtier (10) dans la direction axiale afin de faire face à l'espace à l'intérieur dudit boîtier (10),
ledit filtre (60) est disposé dans une position dans l'espace à l'intérieur dudit boîtier (10) plus proche d'une autre extrémité dudit boîtier (10) dans la direction axiale, et
ledit agent de génération de gaz (52) est disposé dans une position plus proche de ladite extrémité dudit boîtier (10) que la position dans laquelle ledit filtre (60) est disposé.

11. Générateur de gaz selon la revendication 1, dans lequel
ledit allumeur (30) est disposé au niveau d'une extrémité dudit boîtier (10) dans la direction axiale afin de faire face à l'espace à l'intérieur dudit boîtier (10),
ledit agent de génération de gaz (52) est disposé dans une position dans l'espace à l'intérieur dudit boîtier (10) plus proche d'une autre extrémité dudit boîtier (10) dans la direction axiale, et
ledit filtre (52) est disposé dans une position plus proche de ladite extrémité dudit boîtier (10) que la position dans laquelle ledit agent de génération de gaz (60) est disposé.
